# FASCICULE DE BREVET EUROPEEN

(11) **EP 0 459 855 B1**
(45) Date de publication et mention de la délivrance du brevet: **03.08.1994**
(21) Numéro de dépôt: 91401250.5
(22) Date de dépôt: 15.05.1991
(51) Int. Cl.: B60T 13/02, B60T 11/18

(54) **Ensemble de freinage à amplification hydraulique**
Bremsanlage mit hydraulischer Verstärkung
Hydraulically boosted brake assembly

(30) Priorité: 31.05.1990 FR 9006772
(43) Date de publication de la demande: 04.12.1991
(73) Titulaire: ALLIEDSIGNAL EUROPE SERVICES TECHNIQUES, 93700 Drancy (FR)
(72) Inventeur: Thioux, Alain, Bendix Europe Services Techn., F-93700 Drancy (FR); Magnaval, Jean-Louis, Bendix Europe Services Techn, F-93700 Drancy (FR); Moinard, Patrice, Bendix Europe Services Techn, F-93700 Drancy (FR)
(74) Mandataire: Bentz, Jean-Paul

(56) Documents cités:
- DE-A- 1 908 977
- FR-A- 964 918
- FR-A- 2 077 504
- US-A- 2 419 113
- US-A- 4 865 164

## Description

La présente invention concerne un ensemble de freinage à amplification hydraulique comprenant au moins un frein à disque comportant une chape, un étrier et un moteur de frein actionné par un fluide sous pression, un maître-cylindre et un dispositif récupérateur de l'énergie dissipée lors du freinage.

De tels ensembles sont connus dans la technique. Par exemple, FR-A-1 390 259 décrit un tel ensemble dans lequel l'énergie récupérée sert à engendrer une pression appliquée à un fluide incompressible alimentant une chambre additionnelle du maître-cylindre pour amplifier l'effort de freinage.

FR-A-2 022 955 décrit également un tel ensemble, mais dans lequel l'énergie est récupérée du déplacement tangentiel des patins de frein lors du freinage.

Ces ensembles, outre leur complexité, ont notamment pour inconvénient d'être auto-bloquants, l'énergie récupérée n'étant pas maîtrisée.

En outre, la valeur de l'énergie récupérée dépend du coefficient de friction des patins sur le disque et n'est donc constante ni d'un patin à l'autre ni dans le temps.

FR-A-2 077 504 décrit également un ensemble de ce type, comprenant notamment deux moteurs de frein, un cylindre récupérateur d'énergie et un dispositif d'asservissement hydraulique.

Le cylindre récupérateur d'énergie est soumis au couple développé sur le premier moteur de frein, et actionne le second moteur de frein auquel est relié le dispositif d'asservissement hydraulique dont la fonction essentielle est d'assurer un équilibrage des efforts sur les deux moteurs de frein.

Comme cependant le couple exercé par un frein à disque dépend non seulement de la pression de freinage mais aussi, notamment, du coefficient de frottement des patins sur le disque, un tel ensemble ne permet en réalité que d'équilibrer la pression de freinage sur le second moteur de frein par rapport au couple de freinage exercé par le premier moteur de frein.

En outre, la liaison du dispositif d'asservissement hydraulique avec les deux moteurs de frein lui confère une complexité structurelle très importante, se manifestant notamment par un nombre élevé de pièces mobiles, de ports et de canaux.

Le brevet US 2 419 113 décrit lui aussi un frein à disque à récupération d'énergie.

En réalité, ce frein, destiné à un véhicule très lourd et par exemple à un avion, comprend un frein auxiliaire commandé par un maître-cylindre et un frein principal actionné par un levier portant le frein auxiliaire et entraîné en rotation par les forces de frottement qui agissent sur le frein auxiliaire et le déplacent.

Cet arrangement, qui comprend de multiples cylindres de freins, permet d'utiliser l'énergie cinétique du véhicule freiné pour produire, à partir du volume relativement faible initialement produit dans le maître-cylindre, le très grand volume de fluide sous pression nécessaire à l'alimentation de ces cylindres de frein, ces derniers se trouvant alimentés en fluide à basse pression grâce à des clapets anti-retour lorsque les freins ne sont pas actionnés.

Un tel dispositif, dont l'intérêt est fortement lié à son application spécifique, et qui ne permet qu'un contrôle très relatif de la pression de freinage dans le frein principale, ne permet de toute façon aucun contrôle du couple de freinage.

La présente invention a pour but d'obvier à ces inconvénients.

L'invention concerne donc un tel ensemble dans lequel le dispositif récupérateur d'énergie comprend au moins un cylindre récupérateur d'énergie avec un piston, associé à la chape et à l'étrier, dont la chambre de travail est fluidiquement reliée au moteur de frein, et dans lequel un amplificateur-limiteur hydraulique est connecté entre le cylindre récupérateur d'énergie et le moteur de frein, cet amplificateur-limiteur hydraulique étant contrôlé par la pression du fluide engendrée dans le maître-cylindre.

A cette fin, l'invention est essentiellement caractérisée en ce que le dit amplificateur-limiteur hydraulique comporte :
- un premier clapet normalement ouvert interrompant une communication entre le dit cylindre récupérateur d'énergie et le dit moteur de frein lorsque la pression du fluide dans le dit moteur de frein est supérieure à la pression engendrée dans le maître-cylindre multipliée par un rapport d'amplification défini par un rapport de surfaces actives dans le dit amplificateur-limiteur hydraulique;
- un deuxième clapet normalement ouvert interrompant une communication entre le dit cylindre récupérateur d'énergie et le dit maître-cylindre dès que la pression dans ce dernier est supérieure à la pression de repos ; et
- un troisième clapet, normalement fermé, mettant en communication le dit maître-cylindre et le dit moteur de frein lorsque la pression engendrée dans le maître-cylindre est supérieure à celle engendrée dans le cylindre récupérateur d'énergie.

Selon un mode de réalisation, l'étrier est monté à coulissement sur et à rotation autour d'une colonnette solidaire de la chape, cette rotation étant limitée au moins par une partie mobile du cylindre récupérateur d'énergie. L'étrier est en appui sur le piston du cylindre récupérateur d'énergie dont le corps est solidaire de la chape.

Selon un mode de réalisation, le moteur de frein comporte deux chambres indépendantes de travail dont l'une est directement reliée au maître-cylindre et l'autre au cylindre récupérateur d'énergie par l'intermédiaire de l'amplificateur-limiteur hydraulique.

L'invention sera mieux comprise et d'autres buts, avantages et caractéristiques de celle-ci apparaîtront plus clairement à la lecture de la description qui suit de modes de réalisation préférés donnés à titre non limitatif et à laquelle deux planches de dessins sont annexées sur lesquelles :
- La figure 1 représente schématiquement en vue latérale partiellement écorchée un frein à disque comportant un dispositif récupérateur d'énergie conforme à l'invention ;
- La figure 2 représente schématiquement en coupe un amplificateur-limiteur hydraulique conforme à l'invention ;
- Les figures 3 et 4 illustrent chacune un mode de connexion d'un ensemble conforme à l'invention ;

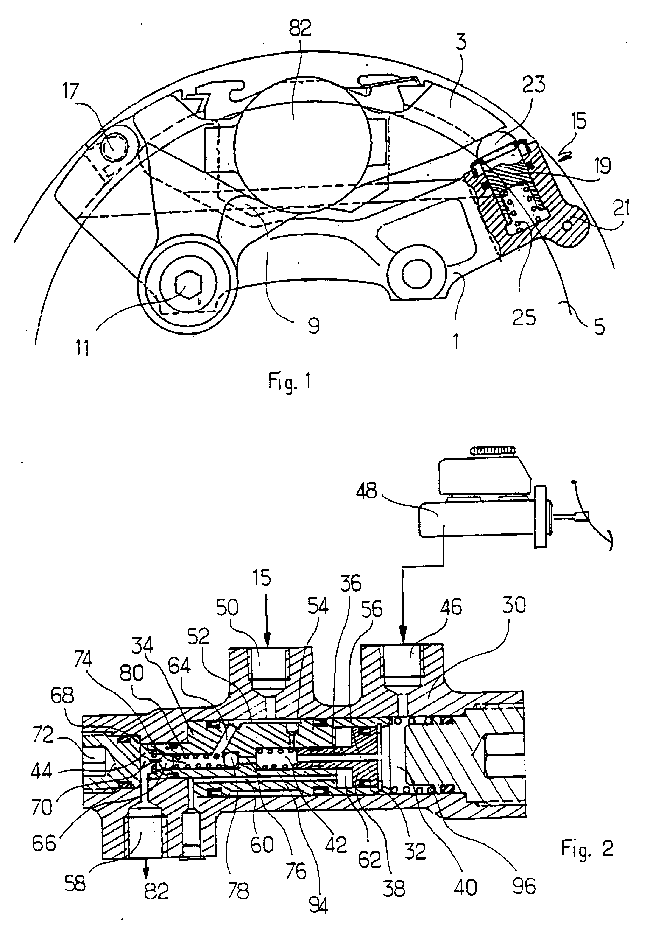

En référence maintenant aux figures, le frein à disque représenté Figure 1 comprend une chape 1 fixée au porte-fusée de la roue ainsi équipée et un étrier 3 chevauchant le disque 5. Un moteur de frein 82 comprenant un piston, applique un patin de frein 9 sur une face du disque 5, tandis que par réaction, l'étrier 3 applique l'autre patin de frein sur l'autre face du disque 5. L'étrier est donc ici du type coulissant. Dans ce but, une colonnette 11 solidaire de la chape 1 détermine une surface de coulissement pour l'étrier 3. Un dispositif 15 de récupération d'une partie de l'énergie dissipée lors du freinage est associé à la chape 1 et à l'étrier 3. L'homme du métier comprendra que lors du freinage, il résulte de la friction des patins sur le disque des efforts appliqués à l'étrier 3 et transmis au châssis par l'intermédiaire de la chape 1. Sur l'exemple représenté, l'étrier 3 est libre en rotation autour de la colonnette 11, cette rotation étant limitée, d'une part par une butée 17 et d'autre part par le dispositif 15 de récupération d'énergie.

Lorsque le disque 5 tourne dans le sens des aiguilles d'une montre (sur la Figure 1), correspondant à un fonctionnement usuel du véhicule (marche avant), les efforts de freinage sont majoritaires et les plus importants. Dans ce but, le dispositif 15 de récupération d'énergie est disposé à droite sur la Figure pour servir d'appui à l'étrier lors du freinage. Du fait que l'assistance obtenue n'est pas nécessaire dans l'autre sens, la butée 17 suffit généralement à immobiliser l'étrier 3 mais pourrait être remplacée par un autre dispositif identique ou similaire au dispositif 15. Les positions relatives de la colonnette 11 et du dispositif 15 peuvent permettre d'accroître l'effort appliqué au dispositif 15.

Ce dispositif 15 est constitué par un cylindre avec son piston 19. Le corps 21 du dispositif 15 est solidaire de la chape 1 tandis que le piston 19 reçoit l'effort exercé par l'étrier 3 lors du freinage, par exemple par l'intermédiaire d'un poussoir 23. Un ressort de rappel 25, disposé dans la chambre de travail du cylindre repousse l'étrier en position de repos au contact de la butée 17. La chambre de travail du cylindre est reliée fluidiquement à un moteur de frein actionnant le frein par l'intermédiaire d'un amplificateur-limiteur hydraulique, tel que représenté Figure 2, contrôlé par la pression du fluide dans le maître-cylindre.

Cet amplificateur-limiteur hydraulique est constitué d'un corps 30 dans lequel est pratiqué un alésage étagé 32 fermé de part et d'autre et où coulisse un piston étagé de façon correspondante 34. Ce piston 34 comprend lui-même un alésage étagé 36 dans lequel coulisse un second piston 38. Trois chambres 40, 42, 44 sont ainsi définies. La chambre 40, fermée par les deux pistons 34 et 38 est connectée par un conduit 46 au maître-cylindre 48 dont elle reçoit le fluide sous pression. La chambre 42 définie dans la partie de plus petit diamètre de l'alésage étagé 36, entre les pistons 34 et 38, est connectée au repos au cylindre récupérateur d'énergie 15 par l'intermédiaire d'un conduit 50, d'une gorge 52 pratiquée à la périphérie du piston 34 et d'un perçage 54. Ce perçage 54 est susceptible d'être fermé par le piston 38 dès lors qu'une pression supérieure à la pression de repos s'établit dans la chambre 40. On remarquera qu'un perçage 56 est également pratiqué dans le piston 38 pour mettre en communication les chambres 40 et 42. La chambre 44 est, pour sa part reliée par un conduit 58 au moteur hydraulique actionnant le frein. Un passage 60 est prévu pour éviter toute dépression ou surpression dans la chambre 62 définie dans la partie de plus grand diamètre de l'alésage étagé 36 entre les deux pistons 34 et 38. Un conduit 64 relie la gorge annulaire 52 communiquant par le conduit 50 avec le cylindre récupérateur d'énergie 15, et la chambre 44 par l'intermédiaire d'une chambre 74 et d'un clapet constitué, dans l'exemple représenté par une bille 66 disposée dans la chambre 74 et repoussée de son siège 68 solidaire du piston 34, par une aiguille 70 solidaire du bouchon 72 fermant l'alésage 32 et la chambre 44. Un perçage 76 fait communiquer les chambres 42 et 74 par l'intermédiaire d'un clapet normalement fermé constitué dans l'exemple représenté par une bille 78 fermant ce perçage 76. Un ressort 80 judicieusement disposé dans la chambre 74 rappelle les deux billes 66 et 78 en position de repos.

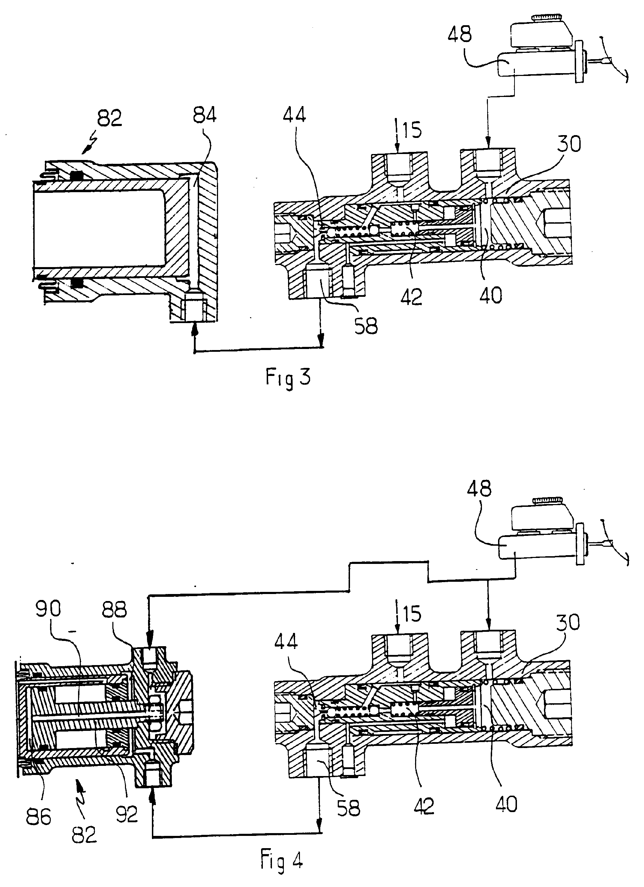

Figures 3 et 4, on a représenté deux modes de connexion de l'ensemble selon l'invention. Dans le mode de la Figure 3, le maître-cylindre 48 n'est pas directement relié au moteur hydraulique 82 de frein. Ce dernier est relié au conduit 58 communiquant avec la chambre 44. Le moteur 82 est de type classique à une seule chambre de travail 84.

Dans le mode de réalisation illustré Figure 4, le moteur 82 est du type à deux chambres de travail 86, 88 dont les efforts s'additionnent. Un conduit 90 pratiqué dans l'excroissance 92 du corps du moteur permet de faire communiquer la chambre 86 avec le maître-cylindre 48 ; la chambre 88 est reliée au conduit 58 pour communiquer avec la chambre 44 de l'amplificateur-limiteur hydraulique.

Dans tous les cas, le fonctionnement de l'ensemble est le suivant. En partant de l'état de repos représenté, lorsque le conducteur du véhicule ainsi équipé appuie sur la pédale de frein alors qu'il roule en marche avant, une pression est engendrée dans le maître-cylindre 48, et est transmise à la chambre 40 de l'amplificateur-limiteur hydraulique. Le piston 38 aussitôt coulisse et ferme le conduit 54. Du fait du perçage 56, la pression monte également dans la chambre 42 et le clapet 60 s'ouvre, alimentant en fluide sous pression la chambre 44 par le clapet 66 ouvert, le conduit 58 et le moteur de frein 82. Les patins de frein entrent en contact avec le disque 5 et l'étrier 3 bascule autour de la colonnette 11 pour déplacer le piston 19 du cylindre récupérateur d'énergie 15. La pression engendrée dans la chambre de travail de ce piston est appliquée alors à la chambre 74 par l'intermédiaire du conduit 50, de la gorge 52 et du conduit 64. Lorsque cette dernière pression atteint celle engendrée dans le maître-cylindre 48, la bille 78 vient fermer le perçage 76, et cette pression apparaît dans la chambre 44. Le rapport des diamètres du piston 34 va alors définir ce moment de fermeture du clapet 66, 68, 70. Ce rapport constitue un rapport d'amplification des pressions du maître cylindre 48 et du récupérateur d'énergie 15. On obtient ainsi un contrôle rigoureux de la pression régnant dans le moteur de frein 82 par les ouvertures et fermetures successives du clapet 66, 68, 70, cette pression étant alors égale à celle engendrée dans le maître-cylindre 48 multipliée par le rapport d'amplification cité ci-dessus.

Lorsque le conducteur relâche le frein, la pression chute dans les chambres 40 et 42, et les pistons 34 et 38 vont se déplacer vers la droite (Figure 2) sous l'effet de la pression résiduelle dans la chambre 44. Un ressort 94, disposé entre les deux pistons 34 et 36, écarte ceux-ci l'un de l'autre. La pression diminuant dans le moteur de frein 82, la pression de réaction dans la chambre de travail du cylindre récupérateur d'énergie baisse également jusqu'à chuter totalement lorsque la communication est rétablie entre les perçages 54 et 56. Lorsque la différence entre les pressions régnant dans les chambres 74 et 44 est supérieure à une valeur déterminée par le tarage du ressort 80, le clapet 66,68,70 s'ouvre, faisant encore décroître la pression du fluide dans le moteur de frein 82. Lorsque l'effet de cette dernière est inférieure à la force exercée par le ressort de rappel 96, le piston 34 est repoussé en butée sur l'épaulement de l'alésage 32 (à gauche Figure 2) et le clapet 66,68,70 est maintenu ouvert. Ces opérations assurent un bon défreinage du système.

Si le conducteur freine alors que le véhicule est en marche arrière, aucune pression n'est engendrée dans la chambre de travail du cylindre récupérateur d'énergie, l'étrier 3 venant en appui sur la butée 17.

Le moteur de frein 82 est alors alimenté comme dans la première partie du fonctionnement décrit ci-avant, aucune amplification de la pression n'ayant alors lieu.

L'homme de l'art comprendra qu'un choix judicieux des rapports de surfaces actives est nécessaire pour mettre en oeuvre correctement l'invention, notamment celle du piston 19 par rapport à celle de la chambre de travail 84 ou 88 du moteur de frein 82 reliée à la chambre 44, ainsi que celles du piston étagé 34.

Dans un mode de réalisé préféré et testé, ces rapports sont les suivants :
* Surface active 19 / surface chambre de travail 84 ou 88 = 1/3
* Rapport des sections du piston étagé 34 = 1/5

On obtient ainsi une amplification hydraulique complètement affranchie des variations du coefficient de friction des patins sur le disque et totalement contrôlée par le conducteur du véhicule.
De nombreuses modifications pourront être apportées par l'homme de métier à cet ensemble sans sortir du cadre de l'invention tel que défini par les revendications ci-jointes.

## Revendications

1. Ensemble de freinage à amplification hydraulique comprenant au moins un frein à disque comportant une chape (1), un étrier (3), un moteur de frein (82) actionné par un fluide sous pression, un maître-cylindre (48), un dispositif (15) récupérateur de l'énergie dissipée lors du freinage, comprenant au moins un cylindre (21) récupérateur d'énergie avec un piston (19), associé à la dite chape (1) et au dit étrier (3), dont la chambre de travail est fluidiquement reliée au dit moteur de frein (82), et un amplificateur-limiteur hydraulique connecté entre le dit cylindre récupérateur d'énergie (15) et le dit moteur de frein (82), le dit amplificateur-limiteur hydraulique étant contrôlé par la pression du fluide engendrée dans le maître-cylindre (48), caractérisé en ce que le dit amplifiacteur-limiteur hydraulique comporte :
- un premier clapet (66, 68, 70) normalement ouvert interrompant une communication entre le dit cylindre récupérateur d'énergie (15) et le dit moteur de frein (82) lorsque la pression du fluide dans le dit moteur de frein (82) est supérieure à la pression engendrée dans le maître-cylindre (48) multipliée par un rapport d'amplification défini par un rapport de surfaces actives dans le dit amplificateur-limiteur hydraulique;
- un deuxième clapet (54, 36) normalement ouvert interrompant une communication entre le dit cylindre récupérateur d'énergie (15) et le dit maître-cylindre (48) dès que la pression dans ce dernier est supérieure à la pression de repos; et
- un troisième clapet (78), normalement fermé, mettant en communication le dit maître-cylindre (48) et le dit moteur de frein (82) lorsque la pression engendrée dans le maître-cylindre est supérieure à celle engendrée dans le cylindre récupérateur d'énergie (15).

2. Ensemble selon la revendication 1, caractérisé en ce que le dit amplificateur-limiteur hydraulique est constitué par un corps (30) dans lequel est pratiqué un premier alésage étagé (32) où coulisse un premier piston étagé (34) manoeuvrant le dit premier clapet (66, 68, 70), le dit premier piston (34) comprenant un deuxième alésage étagé (36) dans lequel coulisse un deuxième piston étagé (38) manoeuvrant le dit deuxième clapet.

3. Ensemble selon la revendication 2, caractérisé en ce que le dit deuxième piston (38) est un piston creux mettant en communication les parties étagées du dit deuxième alésage (36), l'une des faces du dit deuxième piston recevant la pression engendrée dans le maître-cylindre (48) et l'autre formant le dit deuxième clapet.

4. Ensemble selon l'une quelconque des revendications précédentes, caractérisé en ce que le dit étrier (3) est monté à coulissement sur et à rotation autour d'une colonnette (11) solidaire de la dite chape (1), la dite rotation étant limitée au moins par une partie mobile (23) du dit cylindre récupérateur d'énergie (15).

5. Ensemble selon la revendication 4, caractérisé en ce que le dit étrier (3) est en appui sur le piston (23, 19) du dit cylindre récupérateur d'énergie (15) dont le corps (21) est solidaire de la dite chape (1).

6. Ensemble selon l'une quelconque des revendications précédentes, caractérisé en ce que le dit moteur de frein (82) comporte deux chambres indépendantes de travail (86, 88) dont l'une (86) est directement reliée au maître-cylindre (48) et l'autre (88) au dit cylindre récupérateur d'énergie par l'intermédiaire du dit amplificateur-limiteur hydraulique.

## Patentansprüche

1. Bremsanlage mit hydraulischer Verstärkung, mit wenigstens einer Scheibenbremse mit einem Bremsträger (1), einem Bremssattel (3), einem Fluiddruck-betätigten Bremsmotor (82), einem Hauptzylinder (48), einer Vorrichtung (15) zum Wiedergewinnen der beim Bremsen dissipierten Energie mit wenigstens einem Zylinder (21), der zusammen mit einem Kolben (19) die Energie wiedergewinnt und dem Bremsträger (1) und dem Bremssattel (3) zugeordnet ist und dessen Arbeitskammer fluidisch mit dem Bremsmotor (82) verbunden ist, und einem hydraulischen Verstärker/Begrenzer, der zwischen den Zylinder (15) zur Energiewiedergewinnung und den Bremsmotor (82) eingesetzt ist, wobei der hydraulische Verstärker/Begrenzer von im Hauptzylinder (48) erzeugten Fluiddruck gesteuert wird, dadurch gekennzeichnet, daß der hydraulische Verstärker/Begrenzer enthält:
- ein erstes, normalerweise geöffnetes Ventil (66, 68, 70), das eine Verbindung zwischen dem Zylinder (15) zur Energiewiedergewinnung und dem Bremsmotor (82) unterbricht, wenn der Fluiddruck im Bremsmotor (82) größer ist als der im Hauptzylinder (48) erzeugte Druck, multipliziert mit einem vom Verhältnis der aktiven Flächen im hydraulischen Verstärker/Begrenzer definierten Verstärkungsfaktor;
- ein zweites, normalerweise geöffnetes Ventil (54, 36), das eine Verbindung zwischen dem Zylinder (15) zur Energiewiedergewinnung und dem Hauptzylinder (48) unterbricht, sobald der Druck im Hauptzylinder größer als der Ruhedruck ist; und
- ein drittes, normalerweise geschlossenes Ventil (78), das den Hauptzylinder (48) und den Bremsmotor (82) verbindet, wenn der im Hauptzylinder erzeugte Druck größer als der im Zylinder (15) zur Energiewiedergewinnung erzeugte Druck ist.

2. Anlage nach Anspruch 1, dadurch gekennzeichnet, daß der hydraulische Verstärker/Begrenzer aus einem Gehäuse (30) besteht, in dem eine erste Stufenbohrung (32) gebildet ist, in der ein erster Stufenkolben (34) gleitet, der das erste Ventil (66, 68, 70) betätigt, wobei der erste Kolben (34) eine zweite Stufenbohrung (36) enthält, in der ein zweiter Stufenkolben (38) gleitet, der das zweite Ventil betätigt.

3. Anlage nach Anspruch 2, dadurch gekennzeichnet, daß der zweite Kolben (38) ein Hohlkolben ist, der die Stufenabschnitte der zweiten Bohrung (36) miteinander verbindet, wobei eine der Seiten des zweiten Kolbens den im Hauptzylinder (48) erzeugten Druck empfängt und die andere Seite das zweite Ventil bildet.

4. Anlage nach einem der vorhergehenden Ansprüche, dadurch gekennzeichnet, daß der Bremssattel (3) auf einem fest mit dem Bremsträger (1) verbundenen Stab (11) verschiebbar und um ihn drehbar angebracht ist, wobei die Drehung durch wenigstens einen beweglichen Abschnitt (23) des Zylinders (15) zur Energiewiedergewinnung begrenzt ist.

5. Anlage nach Anspruch 4, dadurch gekennzeichnet, daß der Bremssattel (3) sich in Anlage am Kolben (23, 19) des Zylinders (15) zur Energiewiedergewinnung befindet, dessen Gehäuse (21) fest mit dem Bremsträger (1) verbunden ist.

6. Anlage nach einem der vorhergehenden Ansprüche, dadurch gekennzeichnet, daß der Bremsmotor (82) zwei voneinander unabhängige Arbeitskammern (86, 88) enthält, von denen eine (86) direkt mit dem Hauptzylinder (48) und die andere über den hydraulischen Verstärker/Begrenzer mit dem Zylinder zur Energiewiedergewinnung verbunden ist.

## Claims

1. Hydraulically boosted brake assembly, comprising at least one disc brake having a carrier (1), a caliper (3), a brake motor (82) actuated by a fluid under pressure, a master cylinder (48) and a device (15) for recovering the energy dissipated during braking, comprising at least one energy-recovering cylinder (21) with a piston (19) which is associated with the said carrier (1) and with the said caliper (3) and the working chamber of which is connected fluidly to the said brake motor (82), and a hydraulic booster/limiter connected between the said energy-recovering cylinder (15) and the said brake motor (82), the said hydraulic booster/limiter being controlled by the pressure of the fluid generated in the master cylinder (48) characterized in that the said hydraulic booster/limiter comprises
- a first normally open valve (66, 68, 70) interrupting communication between the said energy-recovering cylinder (15) and the said brake motor (82) when the pressure of the fluid in the said brake motor (82) is higher than the pressure generated in the master cylinder (48), multiplied by a boost ratio defined by a ratio of active surfaces in the said hydraulic booster/ limiter;
- a second normally open valve (54, 36) interrupting communication between the said energy-recovering cylinder (15) and the said master cylinder (48) as soon as the pressure in the latter is higher than the rest pressure; and
- a third normally closed valve (78) putting the said master cylinder (48) and the said brake motor (82) in communication when the pressure generated in the master cylinder is higher than that generated in the energy-recovering cylinder (15).

2. Assembly according to Claim 1, characterized in that the said hydraulic booster/limiter consists of a body (30), in which is made a first stepped bore (32) in which slides a first stepped piston (34) operating the said first valve (66, 68, 70), the said first piston (34) comprising a second stepped bore (36), in which slides a second stepped piston (38) operating the said second valve.

3. Assembly according to Claim 2, characterized in that the said second piston (38) is a hollow piston putting the stepped parts of the said second bore (36) in communication, one of the faces of the said second piston receiving the pressure generated in the master cylinder (48) and the other forming the said second valve.

4. Assembly according to any one of the preceding claims, characterized in that the said caliper (3) is slideably mounted on and rotatable about a guide pin (11) fixed to the said carrier (1), the said rotation being at least limited by a movable part (23) of the said energy-recovering cylinder (15).

5. Assembly according to Claim 4, characterized in that the said caliper (3) bears on the piston (23, 19) of the said energy-recovering cylinder (15), the body (21), of which is integral with the said carrier (1).

6. Assembly according to any one of the preceding claims, characterized in that the said brake motor (82) comprises two independent working chambers (86, 88), of which one (86) is connected directly to the master cylinder (48) and the other (88) is connected to the said energy-recovering cylinder by means of the said hydraulic booster/limiter.
